# EUROPÄISCHE PATENTANMELDUNG

(11) **EP 0 673 141 A2**
(43) Veröffentlichungstag der Anmeldung: **20.09.1995**
(21) Anmeldenummer: 95103014.7
(22) Anmeldetag: 03.03.1995
(51) Int. Cl.: H04M 1/00, H04M 1/274

(54) **Telekommunikationsendgerät**

(30) Priorität: 15.03.1994 DE 4408737
(71) Anmelder: Alcatel SEL Aktiengesellschaft, D-70435 Stuttgart (DE); ALCATEL N.V., NL-2288 BH Rijswijk (NL)
(72) Erfinder: Schwarzer, Jürgen, D-70499 Stuttgart (DE); Nielen, Hans-Joachim, D-70825 Korntal-Münchingen (DE)
(74) Vertreter: Knecht, Ulrich Karl

(57) **Zusammenfassung**

Es soll ein einfach zu bedienendes Telekommunikationsendgerät realisiert werden.

Dazu wird erfindungsgemäß eine großflächige berührungssensitive Ein-/Ausgabeeinheit mit Handschriften- und Grafikerkennung in das Gerät integriert, so daß die Funktionen des Gerätes durch Eingabe von vorgegebenen Grafikelementen (sogenannten Gestures) aktiviert oder deaktiviert werden.

## Beschreibung

Kommunikationsgeräte zum Darstellen und Übertragen von graphischen Informationen mit einem Bildschirm, der eine durchsichtige Auflage hat, über die mittels Berührung die Eingabe der graphischen Informationen erfolgt sind bekannt (DE 34 09 532 C2). Dabei ist entweder eine Darstellung und Übertragung von grafischen Informationen oder eine Sprachkommunikation möglich. Die durchsichtige Auflage ist in einen ersten Teil zur Grafikdarstellung und in einen davon getrennten zweiten Teil für die durch Berührung aktivierbaren Funktionen unterteilt. Somit sind sowohl Graphikdarstellungen als auch Telefonfunktionen möglich, jedoch strikt von einander getrennt. Insbesondere ist eine Betriebsart "Graphische Darstellung" möglich, in der sich dann auch die im zweiten Teil der Auflage befindlichen Funktionsdarstellungen in Funktionsfelder für diese Betriebsart ändern. Es muß somit immer zwischen einer Betriebsart "Fernsprechen" und einer Betriebsart "Graphische Darstellung" umgeschaltet werden.

Weiterhin sind sogenannte Personal Digital Assistants (PDA) bekannt, die ein berührungsempfindliches LC-Display aufweisen, welches mittels eines Plastikstiftes bedienbar ist. Aufgrund der speziell entwickelten Software für Schrift- und Grafikerkennung lassen sich per Stifteingabe handschriftlich Funktionen wie Adreßbuch, Zeitplanbuch, Notizbuch aufrufen. Ein spezielle Funktion Assistent, die als Icon angezeigt, nur angetippt werden braucht erkennt bis zu sieben Schlüsselwörter, um Rufnummern, Faxnummern, Mailnummern etc. zu senden, wobei solche Nummern auch über ein optional anschließbares Modem für z.B. Fax dann auswählbar sind. Damit sind per Handschrifteneingabe in Kombination mit Icon's sämtliche Funktionen zum Organisieren eines Büros möglich (Apple Newton MessagePad, Funkschau 19/1993 S. 16-17).

Der Erfindung liegt die technische Aufgabe zugrunde, ein Telekommunikationsendgerät zu realisieren, das wesentlich komfortabler bedienbar ist.

Diese Aufgabe wird erfindungsgemäß durch die Lehre des Patentanspruchs 1 gelöst.

Das erfindungsgemäße Telekommunikationsendgerät realisiert ein multimediales Endgerät, bei dem die Steuerung der Telekommunikationsfunktionen mittels einer graphischen Bedienoberfläche erfolgt. Eine optische Ein-, Ausgabeeinheit ermöglicht, durch eingebbare Grafikelemente wie Striche, Kreise, Buchstaben und Ziffern, die durch eine Handschriftenerkennungssoftware umgesetzt wird, die Aktivierung oder Deaktivierung der Telekommunikationsfunktionen. In vorteilhafter Weise wird dabei eine sogenannte fensterorientierte Bedieneroberfläche verwendet.

Der besondere Vorteil für den Benutzer eines solchen Telekommunikationsendgerätes besteht darin, daß mit Hilfe eines einfachen Stiftes durch Berührung und durch Eingabe von Grafikelementen, sogenannten Gestures, der berührungssensitiven Ein-/Ausgabeeinheit die gesamte Benutzerführung erfolgt, da auch sämtliche Funktionen und deren aktuelle Zustände optische, z.B. in Klartext oder mittels Symbole darstellbar sind.

Weitere vorteilhafte Ausgestaltungen des Gegenstandes der Erfindung sind den Unteransprüchen zu entnehmen.

Ein Ausführungsbeispiel wird im folgenden anhand der Zeichnungen erläutert.

Es zeigen:
- Figuren 1a - 1h: Eine Ein-/Ausgabeeinheit des erfindungsgemäßen Telekommunikationsendgerätes mit Darstellung eines Verbindungsaufbaus, abgehend
- Figuren 2a - 2d: eine Ein-/Ausgabeeinheit mit Darstellung eines Verbindungsaufbaues, ankommend und
- Figuren 3a - 3h: eine Ein-/Ausgabeeinheit mit Darstellung eines Verbindungsaufbaues einer Konferenzschaltung
Ein erfindungsgemäßes Telekommunikationsendgerät enthält eine großflächige berührungssensitive Ein-/Ausgabeeinheit 1, wobei in den Figuren nur auf die Darstellung einer Benutzerführung auf der Ein-/Ausgabeeinheit 1 eingegangen wird. Die Ein-/Ausgabeeinheit 1 kann z.B. das Produkt "Newton MessagePad" von Apple Computer sein, und als berührungssensitives Display in das Telekommunikationsendgerät als Bedienoberfläche integriert werden (vgl. Funkschau 19/1993, S. 16-17, Apple Newton MassagePad). Erfindungsgemäß wird die zur Erkennung von Schriften und Grafik vorhandene Software dazu benutzt, über die Ein-/Ausgabeeinheit 1, gesteuert durch eine Steuerung des Telekommunikationsendgerätes, vorgegebene Grafikelemente, sogenannte Gestures zu erkennen und zur Aktivierung oder Deaktivierung von auf der Ein-/Ausgabeeinheit 1 darstellbaren Telekommunikationsfunktionen 2 zu benutzen.

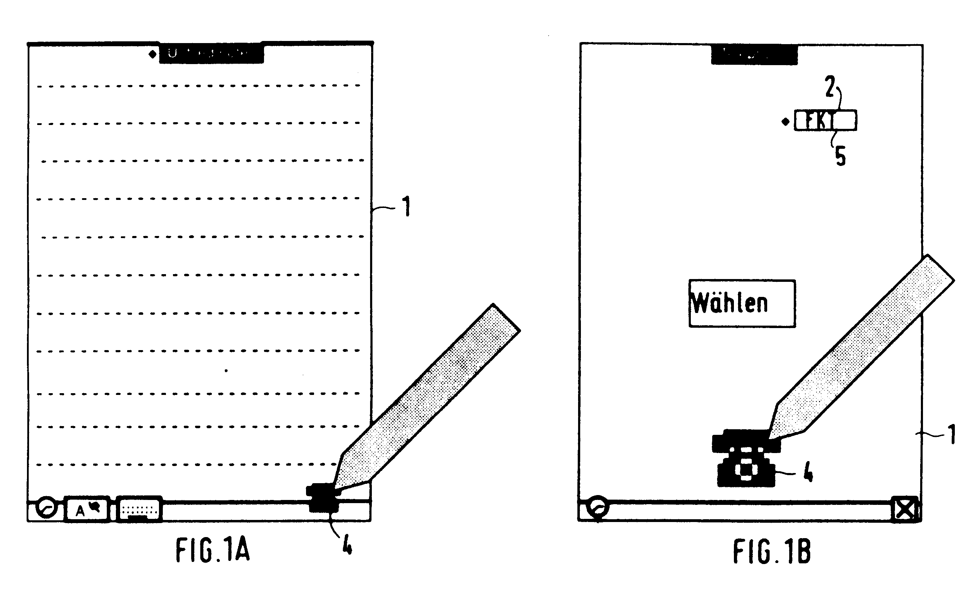

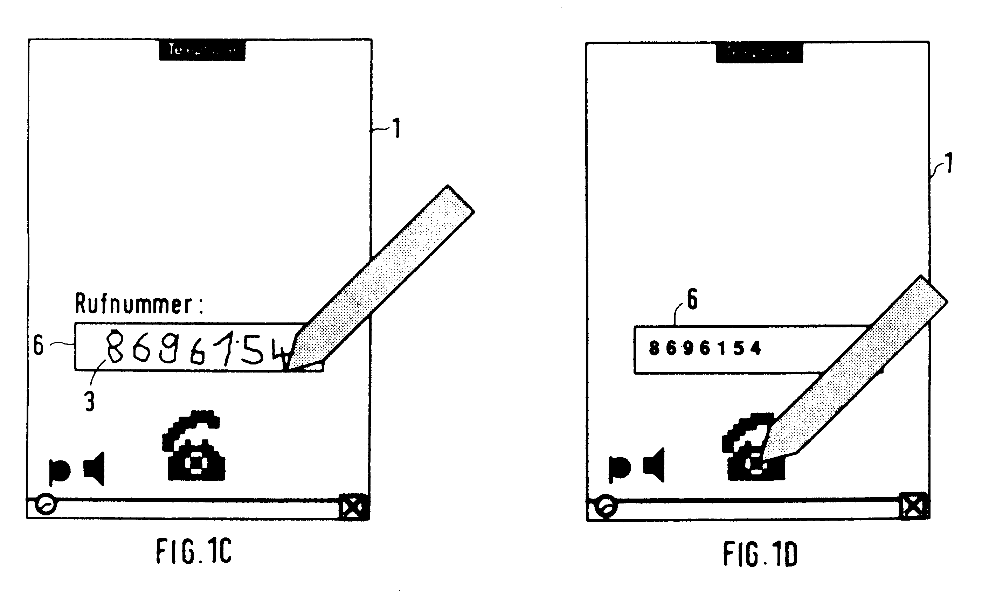

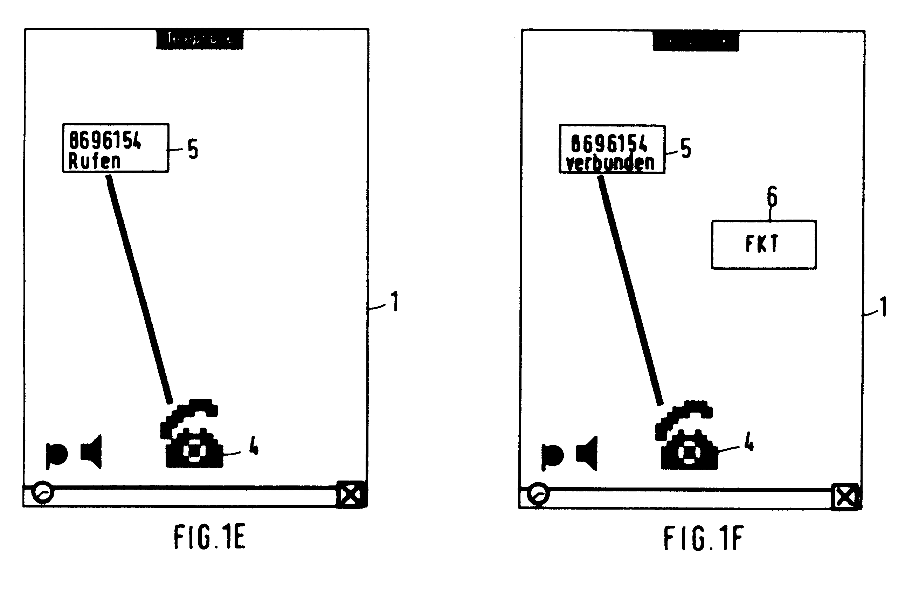

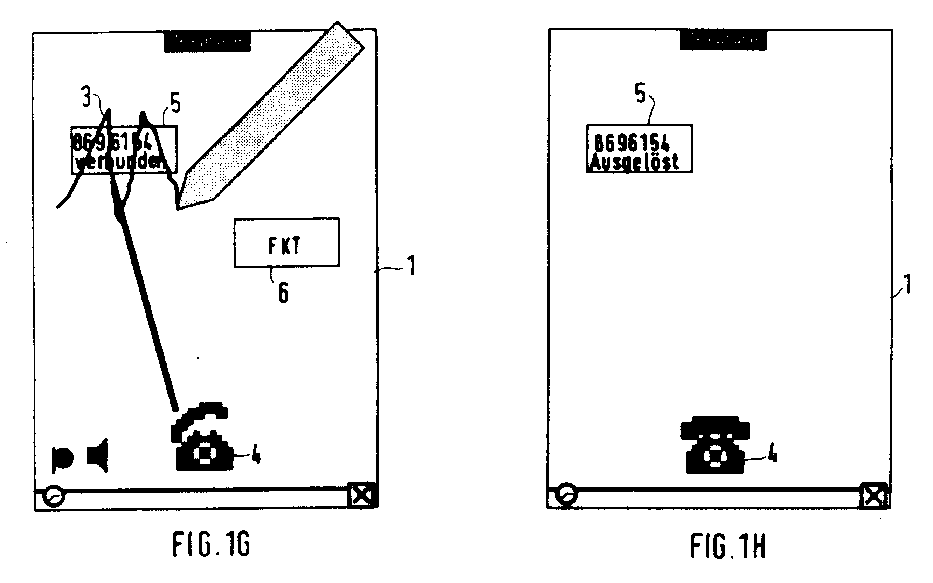

Die ansonsten notwendigen Hardware/Softwareteile eines Telekommunikationsendgerätes zum Steuern der Vielzahl von Telekommunikationsfunktionen, wie Verbindungsauf-/abbau, Konferenzschaltung usw., soweit sie nicht Gegenstand der vorliegenden Erfindung sind, sind z.B. aus "Multimedia Communications Using the Alcatel 2824 ISDN Telephone", von F. Bergler und E. Foth, Electrical Communication 4th Quartal, 1993, S. 394-401 zu entnehmen. Ein dort beschriebenes ISDN Telefon Alcatel 2824, der Firma Alcatel SEL, AG, Stuttgart dient hier als Basis für das erfindungsgemäße Telekommunikationsendgerät. Dabei ist dann anstelle des in obigen Artikel gezeigten Displays in der Figur 1, S. 396, der Apple Newton MassagePad zu integrieren. Im folgenden wird nun die Funktionsweise des erfindungsgemäßen Telekommunikationsendgerätes anhand mehrerer Szenarien beschrieben.

Zunächst wird von einem Ruhezustand des Endgerätes ausgegangen und dann erfindungsgemäß ein Verbindungsaufbau, abgehend geschildert. Dabei wird im folgenden davon ausgegangen, daß zur optischen Darstellung der verschiedenen Telekommunikationsfunktionen eine fensterorientierte Bedienoberfläche vorhanden ist.

Wie in Fig. 1a gezeigt, wird im Ruhezustand auf der Ein-/Ausgabeeinheit 1 ein Telefonsymbol 4 gezeigt, welches zur Anforderung von Telekommunikationsfunktionen dient. Die sonst noch dargestellten Icon's am linken unteren Rand der Ein-/Ausgabeeinheit 1, wie Uhrzeit, werden, da nicht erfindungswesentlich, hier nicht weiter erläutert.

Nach Eingabe eines Grafikelementes 3 mittels eines Stiftes, z.B. in Form eines Hakens, wird ein Fenster 5 zum Anzeigen der möglichen Telekommunikationsfunktion geöffnet (vgl. Fig. 1b). Wird jetzt die Telekommunikationsfunktion FKT Wählen aktiviert, so wird ein weiteres Fenster 6 geöffnet und angezeigt, daß die gewünschte Rufnummer eingegeben werden soll (vgl. Fig. 1c). Die gewünschte Rufnummer, hier 8696154 kann nun per Grafikelemente, wie Ziffern oder Buchstaben eingegeben werden, wohin die Software für die Handschriftenerkennung eine Erkennung durchführt und die erkannte Rufnummer 8696154 dann in dem weiteren Fenster 6 anzeigt wird (vgl. Fig. 1d). Die Steuereinheit des Telekommunikationsendgerätes führt dann in üblicher Weise die Wahl aus und steuert somit den Verbindungsaufbau.

Anstelle der Eingabe einer Rufnummer kann auch ein Name geschrieben werden, für den bei richtiger Erkennung dann eine in einem Speicher abgelegte, zugeordnete Rufnummer ausgelesen und zur Wahl verwendet wird. Anstelle der Ziffern- und/oder Buchstabeneingabe können auch beliebige vom Benutzer entworfene, und in der Software für die Handschriftenerkennung trainierte Gestures als Abkürzung für Rufnummern im Speicher abgelegt und somit benutzt werden.

Gemäß Figur 1e wird nun der Teilnehmer mit der Rufnummer 8696154 gerufen. Dabei kann erfindungsgemäß infolge einer Aktivierung einer Telekommunikationsfunktion, hier Rufen, anstelle von Hörtönen, eine optische Darstellung der Signalisierungszustände auf der Ein-/Ausgabeeinheit 1 erfolgen. Dies erfolgt in Form von Buchstaben und/oder Symbolen. Natürlich ist auch eine Darstellung der Signalisierungszustände zusätzlich zu den Hörtönen möglich.

Gemäß Figur 1e wird in einem Fenster 5 zusätzlich zur Rufnummer das Wort Rufen dargestellt. Nach Herstellung einer Verbindung, Figur 1f, erfolgt dann die Darstellung Rufnummer und der Zustand Verbunden im einen Fenster 5. Zusätzlich kann auch ein der Rufnummer zugeordneter Namen des Teilnehmers angezeigt werden, falls eine entsprechende Zuordnung in dem Speicher abgelegt ist.

Dabei wird, gesteuert durch die Steuereinheit, eine Freisprecheinrichtung zugeschaltet, welches durch die ein einen Lautsprecher darstellenden Symbols erläutert wird.

Erfindungsgemäß wird während einer aktivierten in dem einen Fenster 5 dargestellten Funktion Verbunden, ein weiteres Fenster 6 geöffnet, so daß weitere Funktionen FKT aufrufbar sind.

Will nun ein Benutzer die Funktion Verbindung hergestellt auslösen, d.h. ein Gespräch beenden, so kann er erfindungsgemäß durch Eingabe eines Grafikelementes 3, wie z.B. ein Buchstabe M oder W, welcher über das geöffnete eine Fenster 5 geschrieben wird, vgl. Figur 1g, die Verbindung auslösen. Das somit beendete Gespräch wird in dem einen Fenster dann durch Ausgelöst dargestellt, vgl. Figur 1h, und dann wird die Ein-/Ausgabeeinheit 1 wieder in den Ruhezustand, vgl. Figur 1a, gesteuert.

Allgemein kann damit jegliche Funktion beendet werden, ohne daß der Benutzer sich einzugebende Codes oder bestimmte Kombinationseingaben von Tasten merken muß. Dies ist, wie noch erläutert wird, besonders vorteilhaft, wenn innerhalb einer Funktion weitere aufgebaute Funktionen wieder ausgelöst werden sollen.

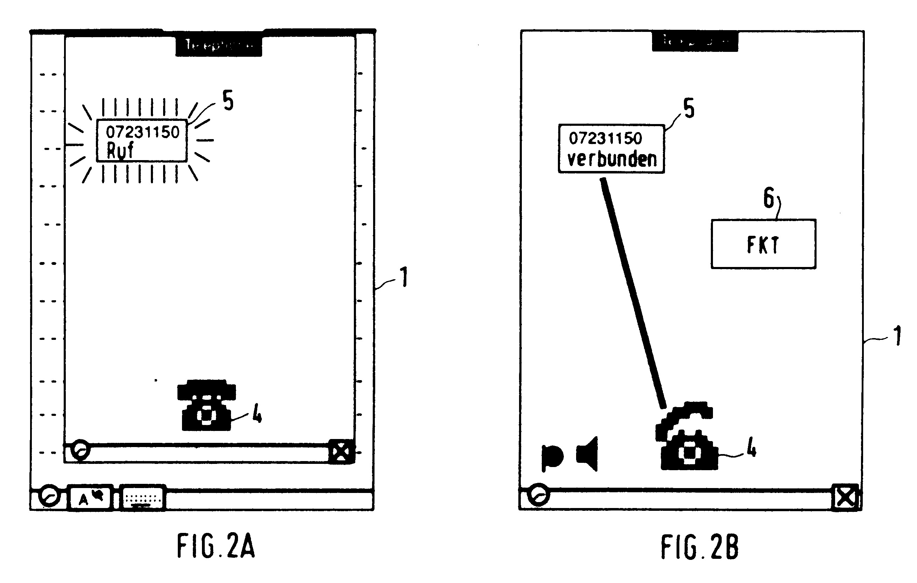

Im weiteren wird die Funktion Verbindungsaufbau, ankommend, anhand der Figuren 2a - 2d erläutert.

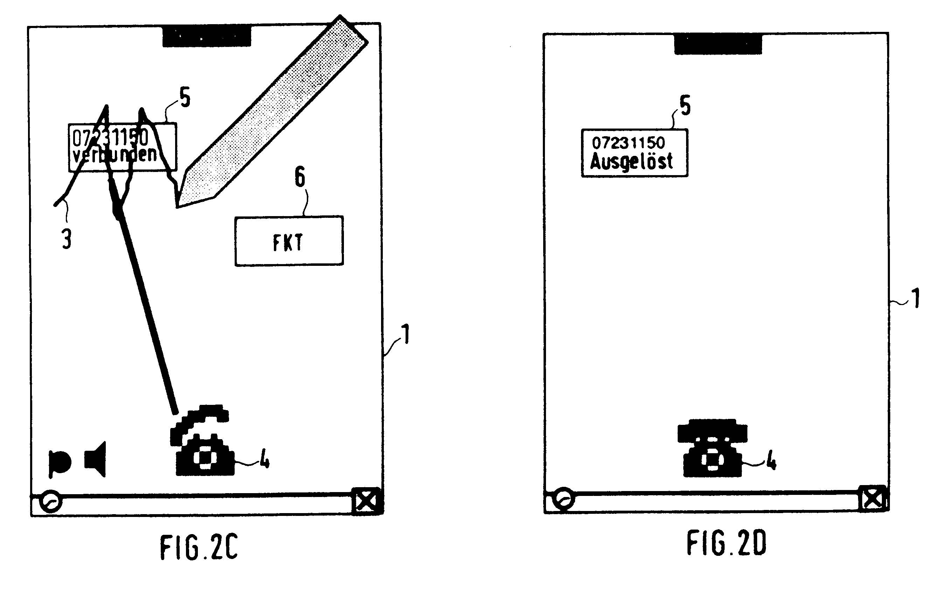

Ein ankommender Ruf öffnet das eine Fenster 5 und wird durch die Rufnummer 072311150 und das Wort Ruf auf der Ein-/Ausgabeeinheit 1 dargestellt. Ein Symbol zur Darstellung des Signalisierungszustands Ruf, ankommend, kann eine Art "Blinken" um die genannten Angaben, vgl. Figur 2a, sein. Wird nun das Symbol zur Anforderung von Telekommunikationsfunktionen, hier das Telefonsymbol mittels Eingabe eines Grafikelementes oder durch Berühren des Symbols mit dem Stift aktiviert, so wird der Ruf angenommen, d.h. eine Verbindung hergestellt und gleichzeitig die Freisprecheinrichtung, Symbol Lautsprecher, angeschaltet. Dabei wird in dem einen Fenster die Rufnummer und gegebenenfalls der Name des Anrufenden und das Wort Verbunden dargestellt (vgl. Figur 2b). Auch hier kann in einem weiteren Fenster 6 die Möglichkeit weitere Funktionen aufzurufen dargestellt werden. Der Verbindungsaufbau, vgl. Figuren 2c und 2d, erfolgt analog wie in den Figuren 1g und 1h geschildert und zwar mittels Eingabe eines Graphikelementes 3, hier ein Buchstabe M.

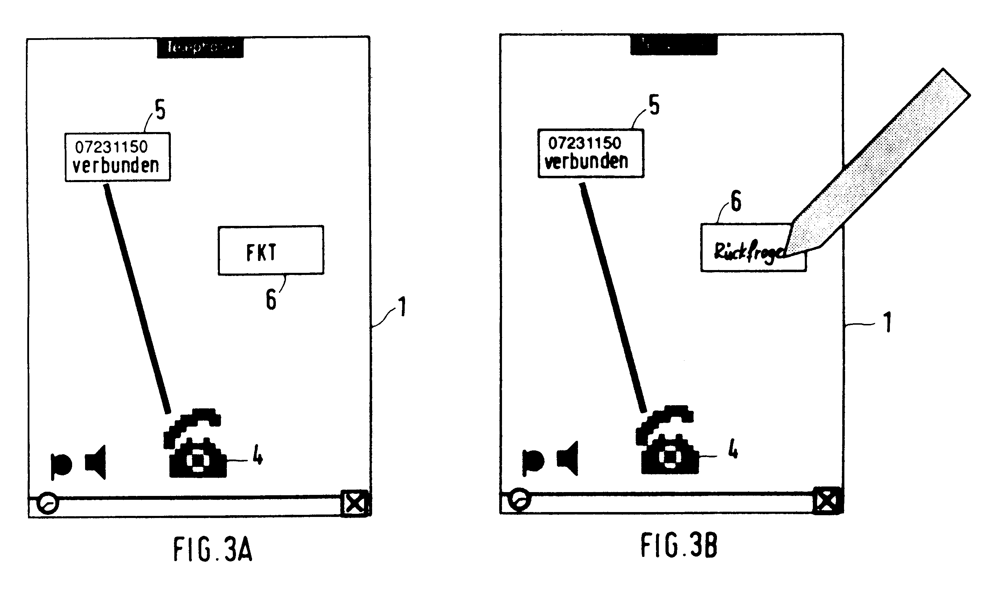

Im folgenden wird nun anhand der Figuren 3a bis 3h der Aufbau einer Konferenzverbindung mittels des erfindungsgemäßen Telekommunikationsendgerätes geschildert.

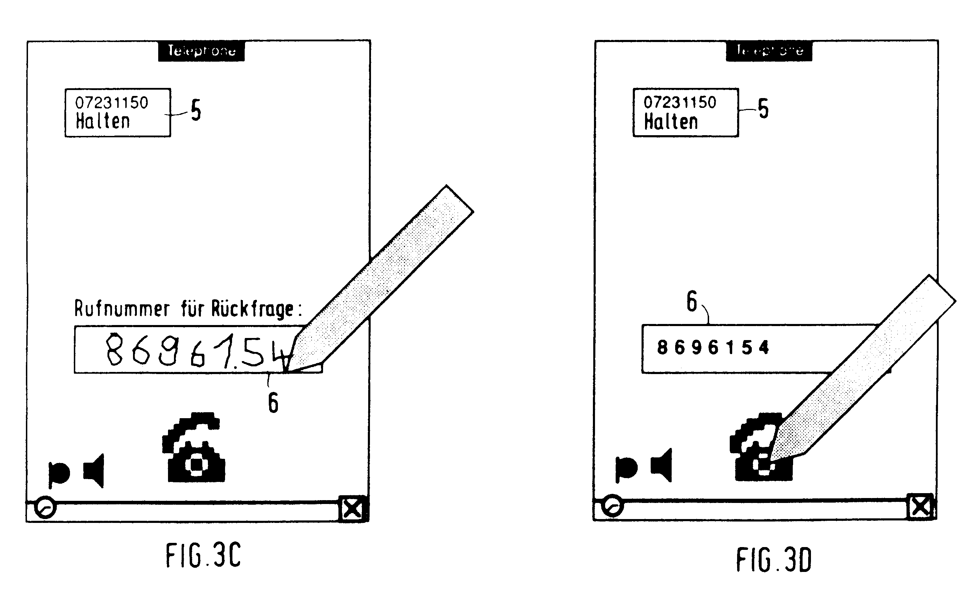

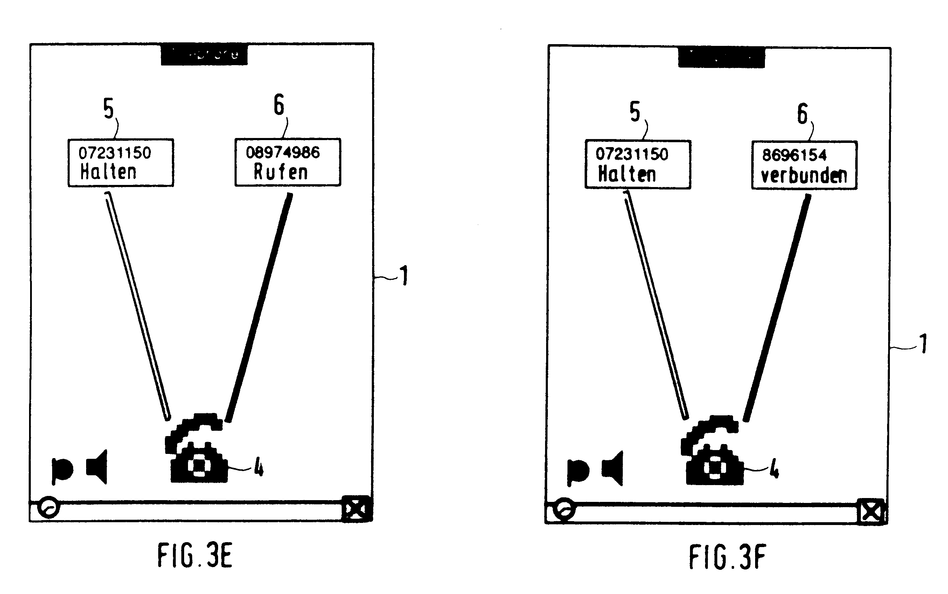

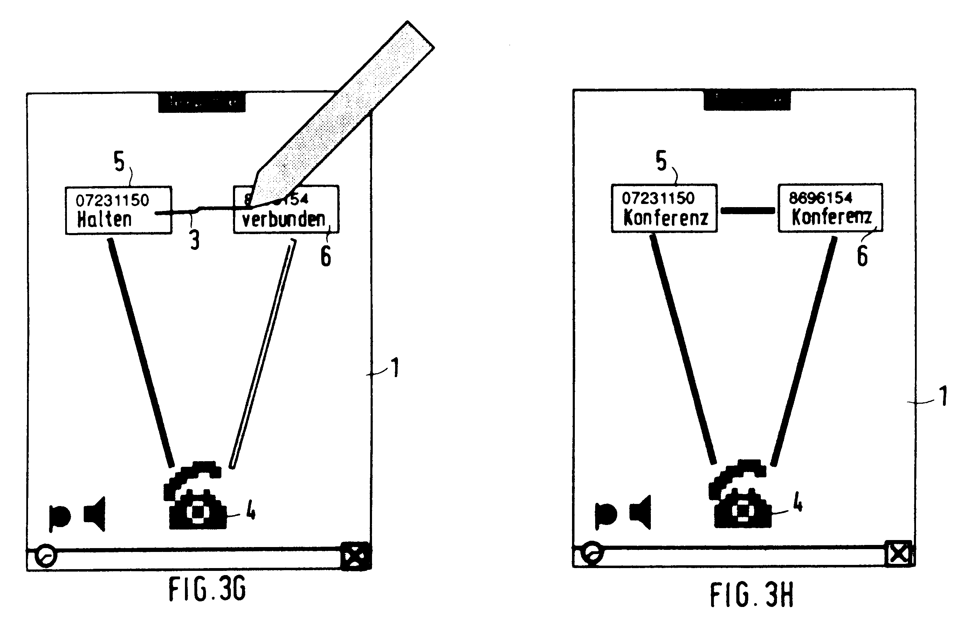

Ausgehend von einer bestehenden Verbindung, wie in Figur 3a dargestellt, wird nun durch Eingabe in dem weiteren Fenster 6 die Funktion Rückfrage aktiviert (vgl. Figur 3b). Dadurch wird die in dem einen Fenster 5 dargestellte Funktion Verbunden in die Funktion Halten gesteuert, vgl. Figur 3c, und gleichzeitig in dem weiteren Fenster 6 zur Eingabe der Rufnummer für die Rückfrage aufgefordert. Jetzt kann der Benutzer, wie schon zu Figur 1c erläutert, die gewünschte Rufnummer eingeben. Die gewünschte Rufnummer, hier 8696154 wird dann nach Erkennung bestätigt, vgl. Figur 3d, und es wird der Teilnehmer mit der Rufnummer 8696154 gerufen, vgl. Figur 3e. Zur Symbolisierung des Zustandes Halten wird hier ein Strich vom Telefonsymbol 4 zum einen Fenster 5 "transparent" dargestellt, während die aktivierte Funktion Rufen durch einen entsprechenden Vollstrich dargestellt wird (vgl. Figur 3e-3f). Nach erfolgtem Rückfrageaufbau, Figur 3f, kann nun eine Konferenzverbindung hergestellt werden. Dazu wird ein Grafikelement 3, hier ein Strich zwischen dem einen Fenster 5 und dem weiteren Fenster 6 gezogen. Durch dieses einfache und sehr einprägsame Gesture, vgl. Figur 3g, wird nun eine Konferenzschaltung hergestellt und entsprechend durch die Worte Konferenz bestätigt, vgl. Figur 3h.

Anstelle der Initialisierung einer Konferenzverbindung, vgl. Fig. 3g, kann erfindungsgemäß in diesem Zustand, Darstellung der Funktion Halten in dem einen Fenster 5 und Darstellung der Funktion Verbunden in dem weiteren Fenster 6 eine Funktion Übergabe des Gespräches aktiviert werden. Dazu wird ein Gestures in Form eines Kreises um das eine und das weitere Fenster eingegeben, welches dann diese Funktion aktiviert. Danach kann dann entweder der Ruhezustand gesteuert werden oder es kann irgendeine weitere Funktion wie z.B. das Wählen einer anderen Teilnehmernummer aktiviert werden.

Gerade hier zeigt sich die Einfachkeit der Bedienmöglichkeiten gemäß dem erfindungsgemäßen Telekommunikationsendgerätes.

Entsprechend den in Figuren 1 bis 3 geschilderten Funktionen können auch sämtliche weiteren Funktionen durch Eingabe von Gestures aktiviert oder deaktiviert werden.

## Patentansprüche

1. Telekommunikationsendgerät, mit einer großflächigen berührungssensitiven optischen Ein-/Ausgabeeinheit (1) und mit einer Steuerung zur optischen Darstellung von Telekommunikationsfunktionen (2) auf der Ein-/Ausgabeeinheit (1), sowie zur Erkennung von vorgegebenen, über die Ein-/Ausgabeeinheit (1) eingebbaren Grafikelementen (3) (gestures) zur Aktivierung oder Deaktivierung der Telekommunikationsfunktionen (2).

2. Telekommunikationsendgerät nach Anspruch 1, bei dem die Steuerung zur optischen Darstellung der Telekommunikationsfunktionen mittels einer fensterorientierten Bedienoberfläche erfolgt.

3. Telekommunikationsendgerät nach Anspruch 2, bei dem im Ruhezustand auf der Ein-/Ausgabeeinheit (1) ein Symbol (4) zur Anforderung von Telekommunikationsfunktionen angezeigt wird und bei dem infolge einer Eingabe eines Grafikelementes ein Fenster (5) zum Anzeigen von Telekommunikationsfunktionen aufgemacht wird.

4. Telekommunikationsendgerät nach Anspruch 3, bei dem infolge einer Aktivierung einer angezeigten Telekommunikationsfunktion (2) Wählen ein weiteres Fenster (6) aufgemacht wird und bei dem infolge einer Eingabe von Grafikelementen (3) in Form von Ziffern und/oder Buchstaben, gesteuert durch die Steuereinheit, eine Wahl ausgeführt und eine Verbindung aufgebaut wird.

5. Telekommunikationsendgerät nach Anspruch 3, bei dem infolge einer Aktivierung eines der Telekommunikationsfunktionen anstelle von oder zusätzlich zu Hörtönen eine optische Darstellung der Signalisierungszustände in Form von Buchstaben und/oder Symbolen auf der Ein-/Ausgabeeinheit (1), gesteuert durch die Steuereinheit, erfolgt.

6. Telekommunikationsendgerät nach Anspruch 3, bei dem infolge eines ankommenden Rufes, gesteuert durch die Steuereinheit, ein Fenster (5) zur Darstellung der Telekommunikationsfunktion Rufen aufgemacht wird, bei dem infolge einer Eingabe eines Grafikelementes (3) oder einer Berührung des Fensters (5) auf der Ein-/Ausgabeeinheit (1) eine Verbindung hergestellt, eine Freisprecheinrichtung aktiviert und eine Darstellung der Funktion Verbindung hergestellt in dem Fenster (5) erfolgt.

7. Telekommunikationsendgerät nach Anspruch 5, bei dem infolge einer Darstellung Verbindung hergestellt durch Eingabe eines Grafikelementes, insbesondere in Form eines Buchstabens W oder M, über das geöffnete Fenster (5) die Telekommunikationsfunktion ausgelöst und das Fenster (5) geschlossen wird.

8. Telekommunikationsendgerät nach Anspruch 4 oder 6, bei dem während einer aktivierten in einem Fenster (5) dargestellten Funktion ein weiteres Fenster (6) geöffnet ist, in dem eine Darstellung weitere aufrufbarer Telekommunikationsfunktionen erfolgt.

9. Telekommunikationsendgerät nach Anspruch 8, bei dem durch aktivieren der Funktion Wählen in dem weiteren Fenster (6), die in dem einen Fenster (5) dargestellte Funktion Verbindung herstellt in die Funktion Verbindung halten gesteuert wird und nach Eingabe von Grafikelementen (3) in Form von Ziffern und/oder Buchstaben in dem weiteren Fenster (6) eine weitere Verbindung aufgebaut wird.

10. Telekommunikationsendgerät nach Anspruch 9, bei dem in einem Zustand Darstellung der Funktion Verbindung halten in dem einen Fenster (5) und Darstellung der Funktion Verbindung hergestellt in dem weiteren Fenster (6) durch Eingabe eines Grafikelementes (3) in Form eines Striches zwischen dem einen (5) und dem weiteren Fenster (6) eine Funktion Konferenzschaltung aktiviert wird.

11. Telekommunikationsendgerät nach Anspruch 9, bei dem in einem Zustand Darstellung der Funktion Verbindung halten in dem einen Fenster (5) und Darstellung der Funktion Verbindung hergestellt in dem weiteren Fenster (6) durch Eingabe eines Grafikelementes (3) in Form eines Kreises um das eine (5) und das weitere Fenster (6) eine Funktion Übergabe des Gespräches aktiviert wird.
